# EUROPÄISCHE PATENTSCHRIFT

(11) **EP 2 640 618 B1**
(45) Veröffentlichungstag und Bekanntmachung des Hinweises auf die Patenterteilung: **27.05.2015**
(21) Anmeldenummer: 11745693.9
(22) Anmeldetag: 09.08.2011
(51) Int. Cl.: B60T 10/02, F16D 57/04

(54) **ANTRIEBSSTRANG MIT EINEM HYDRODYNAMISCHEN RETARDER UND VERFAHREN ZUM EINSTELLEN DES BREMSMOMENTES**
DRIVE TRAIN WITH HYDRODYNAMIC RETARDER AND BRAKE TORQUE SETTING METHOD
CHAÎNE CINÉMATIQUE AVEC RALENTISSEUR HYDRODYNAMIQUE ET PROCÉDÉ DE RÉGLAGE LE COUPLE DE FREINAGE

(30) Priorität: 19.11.2010 DE 102010051717
(43) Veröffentlichungstag der Anmeldung: 25.09.2013
(73) Patentinhaber: Voith Patent GmbH, 89522 Heidenheim (DE)
(72) Erfinder: HUTH, Tilman, 74589 Satteldorf (DE); LAUKEMANN, Dieter, 74546 Crailsheim (DE)
(74) Vertreter: Dr. Weitzel & Partner
(86) Internationale Anmeldenummer: PCT/EP2011/003968
(87) Internationale Veröffentlichungsnummer: WO 2012/065653

(56) Entgegenhaltungen:
- EP-B1- 1 548 315
- DE-A1- 2 017 617
- DE-A1- 4 408 349
- DE-A1- 4 408 350
- DE-A1- 4 440 162
- DE-A1- 4 445 024
- DE-A1- 4 446 288
- DE-A1- 19 544 189
- DE-A1- 19 641 557
- DE-A1- 19 939 726

## Beschreibung

Die vorliegende Erfindung betrifft einen Antriebsstrang mit einem hydrodynamischen Retarder, insbesondere einen Kraftfahrzeugantriebsstrang, im Einzelnen gemäß dem Oberbegriff von Anspruch 1. Ferner betrifft die vorliegende Erfindung ein Verfahren zum Einstellen des Bremsmomentes eines hydrodynamischen Retarders in einem solchen Antriebsstrang.

Hydrodynamische Retarder werden seit langem als verschleißfreie Dauerbremsen in Kraftfahrzeugen oder auch in stationären Anlagen eingesetzt. Herkömmlich unterscheidet man zwischen Primärretardern, die in Abhängigkeit der Drehzahl des Antriebsmotors arbeiten, und zwischen Sekundärretardern, die auf der Getriebeabtriebswelle oder einem Nebenabtrieb des Getriebes angeordnet sind und damit in Abhängigkeit der Drehzahl der Getriebeabtriebswelle und somit in Abhängigkeit der Fahrgeschwindigkeit arbeiten.

Auf der Primärseite des Antriebsmotors angeordnete Primärretarder werden beispielsweise in den Druckschriften DE 44 08 349, DE 44 08 350, DE 44 40 162 und DE 199 39 726 beschrieben.

DE 44 46 288 beschreibt einen Primärretarder auf der Primärseite des Motors, und einen zweiten Retarder, der als Sekundärretarder getriebeabtriebsseitig angeordnet ist.

Das Dokument DE 198 40 284 A1 beschreibt einen Primärretarder, der unmittelbar auf der Getriebeeingangswelle angeordnet ist.

Das Dokument DE 2 017 617 beschreibt einen seitlich am Getriebe angeordneten hydrodynamischen Retarder, dessen Rotor über ein Zwischenzahnrad mit einem Zahnrad des Getriebes, beispielsweise dem Kopfzahnrad am vorderen Ende der Vorgelegewelle des Getriebes, in Eingriff steht.

Das Dokument DE 44 45 024 beschreibt einen sekundärseitig auf einem Hochtrieb des Getriebes angeordneten Retarder.

DE 196 41 557 A1 beschreibt einen fahrgeschwindigkeitsabhängig betriebenen Retarder, demnach Sekundärretarder, der jedoch auch auf der Primärseite des Getriebes, insbesondere zusammen mit einer Wasserpumpe angeordnet werden kann.

Das Dokument EP 1 548 315 B1 beschreibt die Anordnung eines hydrodynamischen Retarders auf einem Nebenabtrieb, einem sogenannten "Power Take-Off" des Antriebsmotors in einem vom Antriebsmotor getragenen Gehäuse, wobei die Retarderantriebswelle einen Flansch zum Anschluss eines weiteren Nebenaggregates aufweist.

Obwohl somit bereits zahlreiche Anordnungsmöglichkeiten für einen hydrodynamischen Retarder im Antriebsstrang vorgeschlagen wurden, gibt es einen fortwährenden Bedarf, den Retarder kostengünstig in den Antriebsstrang zu integrieren.

Der Erfindung liegt demnach die Aufgabe zugrunde, einen Antriebsstrang mit einem hydrodynamischen Retarder und ein Verfahren zum Einstellen des Bremsmomentes mit einem solchen Retarder anzugeben, bei welchem eine Integration und insbesondere eine Nachrüstung des Retarders besonders kostengünstig möglich ist. Dabei soll die Integration den Bedarf einer Umgestaltung des Antriebsstranges möglichst minimieren, vorhandenen Bauraum optimal ausnutzen und bestehende Komponenten zur Integration des Retarders sinnvoll nutzen. Der Aufwand für die Integration soll minimal sein.

Die erfindungsgemäße Aufgabe wird durch einen Antriebsstrang mit den Merkmalen von Anspruch 1 sowie ein Verfahren mit den Merkmalen von Anspruch 8 gelöst. Die abhängigen Ansprüche beschreiben vorteilhafte und besonders zweckmäßige Ausgestaltungen der Erfindung.

Ein erfindungsgemäßer Antriebsstrang, insbesondere Kraftfahrzeugantriebsstrang, weist einen Antriebsmotor mit einer Hauptabtriebswelle auf. Mittels der Hauptabtriebswelle werden Antriebsräder oder ein anderes Aggregat angetrieben. In der Regel ist an der Hauptabtriebswelle eine Getriebeeingangswelle eines dem Antriebsmotor im Antriebsleistungsfluss nachgeschalteten Getriebes angeschlossen. Das Getriebe ist vorteilhaft als Wechselgetriebe ausgeführt, insbesondere als Automatgetriebe, automatisiertes Schaltgetriebe oder Handschaltgetriebe. Auch andere Getriebebauarten, beispielsweise stufenlose Getriebe oder Doppelkupplungsgetriebe kommen in Betracht. In der Regel werden die Antriebsräder des Kraftfahrzeugs entsprechend vom Antriebsmotor über das Getriebe angetrieben, in der Regel unter Zwischenschaltung einer Kardanwelle.

Alternativ ist die Erfindung jedoch auch bei einem stationären Antriebsstrang anwendbar, bei welchem ein Aggregat über das Getriebe vom Antriebsmotor angetrieben wird. Auch bei der Anwendung in einem Kraftfahrzeug kann das Getriebe im Antriebsleistungsfluss zwischen dem Antriebsmotor und einem Aggregat des Kraftfahrzeugs, das mittels des Antriebsmotors angetrieben werden soll, angeordnet sein.

Der Antriebsmotor ist in der Regel als Verbrennungsmotor ausgeführt, wobei die Hauptabtriebswelle als Kurbelwelle ausgeführt ist.

Der erfindungsgemäße Antriebsstrang weist ferner einen hydrodynamischen Retarder auf, umfassend ein angetriebenes beschaufeltes Primärrad, auch Rotor genannt, und ein stationäres oder gegenläufig zum Primärrad angetriebenes beschaufeltes Sekundärrad. Wenn das Sekundärrad gegenläufig zum Primärrad angetrieben ist, wird ein Gegenlaufretarder ausgebildet. Wenn das Sekundärrad stationär ist, wird es als Stator bezeichnet.

Primärrad und Sekundärrad bilden miteinander einen mit Arbeitsmedium befüllbaren oder befüllten Arbeitsraum, in welchem sich im Bremsbetrieb eine Kreislaufströmung eines Arbeitsmediums einstellt, um Drehmoment hydrodynamisch vom Primärrad auf das Sekundärrad zu übertragen und dadurch das Primärrad abzubremsen.

Der Antriebsmotor weist ferner eine Nebenabtriebswelle auf, über welche das Primärrad des hydrodynamischen Retarders angetrieben wird. Vorteilhaft ist der hydrodynamische Retarder auf der Seite des Getriebes an der Nebenabtriebswelle des Antriebsmotors angeschlossen positioniert.

Erfindungsgemäß ist nun der hydrodynamische Retarder als einstufiger, ungeregelter Retarder ausgeführt, der ausschließlich zwischen einem eingeschalteten Zustand und einem ausgeschalteten Zustand schaltbar ist. Demnach weist der Retarder keine sonst üblicherweise vorgesehene Regelung oder Steuerung verschiedener Bremsmomentstufen auf, wie sie herkömmlich beispielsweise über einen Retarderbedienhebel durch den Kraftfahrzeugführer einstellbar sind oder von einem Fahrerassistenzsystem abrufbar sind. Vielmehr ist der Retarder sozusagen nur schwarz/weiß einschaltbar beziehungsweise ausschaltbar.

Besonders günstig ist es, wenn der Retarder hinsichtlich seiner Leistungsübertragungsfähigkeit beziehungsweise seines maximalen Bremsmomentes derart dimensioniert und derart insbesondere mittels des Fahrzeugkühlkreislaufes gekühlt ausgeführt ist, dass auf eine sogenannte Temperaturabregelung des maximalen Bremsmomentes verzichtet werden kann. Eine solche Temperaturabregelung sieht herkömmlich vor, die Temperatur des Arbeitsmediums und/oder des Kühlmediums zu erfassen und/oder beispielsweise die Drehzahl einer durch den Antriebsmotor angetriebenen Kühlmediumpumpe, die das Kühlmedium umwälzt, beziehungsweise unmittelbar die Drehzahl des Antriebsmotors, um in Abhängigkeit dieser Größen das maximal einstellbare Retarderbremsmoment zu begrenzen. Andere Bremsmomentabregelungen sehen vor, nicht unmittelbar die Temperatur des Arbeitsmediums zur Abregelung heranzuziehen, sondern die Geschwindigkeit des Temperaturanstiegs des Arbeitsmediums und/oder des Kühlmediums.

Aufgrund dessen, dass der erfindungsgemäße hydrodynamische Retarder erfindungsgemäß ungeregelt und somit vorteilhaft auch ohne eine solche Temperaturabregelung ausgeführt ist, kann die Einbindung in den Antriebsstrang besonders kostengünstig erfolgen. Auch zeigt sich ein solcher erfindungsgemäß integrierter Retarder im Betrieb als äußerst robust und wenig anfällig für Störungen, insbesondere im Ansteuersystem, da eine einfache Ein-/Ausschaltung ausreicht.

Insbesondere wenn der hydrodynamische Retarder als Ölretarder mit dem Arbeitsmedium Öl ausgeführt ist, ist es günstig, dass der hydrodynamische Retarder einen Wärmetauscher aufweist, über welchen Wärme aus dem Arbeitsmedium abgeführt wird. Die Abführung kann in die Umgebung oder gemäß einer anderen Ausführungsform in einen hinsichtlich der Wärmeübertragung sekundärseitig am Wärmetauscher angeschlossenen Fahrzeugkühlkreislauf erfolgen, über welchen insbesondere auch der Antriebsmotor gekühlt wird. Ein solcher Fahrzeugkühlkreislauf weist in der Regel eine Kühlmediumpumpe auf, die vom Antriebsmotor oder von einem anderen Motor, insbesondere Elektromotor oder Hydromotor angetrieben werden kann.

Gemäß einer alternativen Ausführungsform ist der hydrodynamische Retarder unmittelbar in den Fahrzeugkühlkreislauf integriert, wobei mittels des Kühlkreislaufes insbesondere der Antriebsmotor gekühlt wird. Das Arbeitsmedium des Retarders ist zugleich das Kühlmedium des Fahrzeugkühlkreislaufes, insbesondere Wasser oder ein Wassergemisch.

Gemäß einer besonders günstigen Ausführungsform der Erfindung ist der Retarder nicht auf der herkömmlich verwendeten getriebefernen Primärseite des Antriebsmotors, sondern als Primärretarder an einem Nebenabtrieb des Antriebsmotors auf der Seite des Getriebes, somit der Sekundärseite des Antriebsmotors angeschlossen. Die Anordnung benötigt demnach keinen Bauraum im Bereich der Hauptabtriebswelle des Antriebsmotors beziehungsweise der Getriebeeingangswelle des dem Antriebsmotor nachgeschalteten Getriebes und das Getriebegehäuse kann bei Bedarf geschickt zum Lagern einzelner Komponenten des Retarders, insbesondere des Sekundärrades des Retarders, oder des gesamten Retarders verwendet werden. Gleichzeitig bleiben Nebenabtriebe des Antriebsmotors auf dessen Primärseite, auch als Power Take-Off bezeichnet, frei für andere Nebenaggregate, ohne dass die eingangs beschriebene Notwendigkeit besteht, auf der Retarderantriebswelle einen weiteren Flansch zur Aufnahme beziehungsweise zum Anschluss weiterer Nebenaggregate vorzusehen. Dies bedeutet nicht, dass bei der vorliegenden erfindungsgemäßen Anordnung eine solche Anschlussmöglichkeit auf der Sekundärseite des Antriebsmotors nicht vorgesehen werden kann.

Das Ein- und Ausschalten des Retarders erfolgt gemäß einer ersten Ausgestaltung der Erfindung durch Unterbrechen des Antriebs des Primärrades, insbesondere mittels einer Synchronisierkupplung. Zusätzlich oder alternativ kann bei einem gegenläufig zum Primärrad angetriebenen Sekundärrad auch der Antrieb des Sekundärrades unterbrochen werden, insbesondere mittels einer Synchronisierkupplung. Bei einem stationären Sekundärrad besteht auch die Möglichkeit, eine Abstützung des Sekundärrades gegen Verdrehen wahlweise zu unterbrechen, insbesondere mittels einer Synchronisierkupplung.

Selbstverständlich kommen auch andere Kupplungen als Synchronisierkupplungen in Betracht, beispielsweise nicht synchronisierte Kupplungen, die nur bei geringem oder keinem Schlupf zwischen beiden Kupplungshälften einrückbar sind.

Gemäß einer alternativen Ausgestaltung der Erfindung oder zusätzlich zu der beschriebenen Unterbrechung der Antriebe beziehungsweise der Abstützung kann dem Retarder eine Befülleinrichtung zur wahlweisen Befüllung des Arbeitsraumes mit Arbeitsmedium zugeordnet sein, und die Befülleinrichtung zum Einschalten des Retarders einen Zulauf für Arbeitsmedium in den Arbeitsraum freigeben oder ein vorbestimmtes Arbeitsmediumvorratsvolumen in den Arbeitsraum verdrängen. Zum Ausschalten kann dann der Zulauf versperrt und/oder ein Ablauf für das Arbeitsmedium aus dem Arbeitsraum, insbesondere durch die Befülleinrichtung, geöffnet werden. Alternativ kann die Befülleinrichtung oder eine zusätzlich vorgesehene Entleereinrichtung das Arbeitsmedium aus dem Arbeitsraum abziehen.

Die Befülleinrichtung kann beispielsweise einen Füllzylinder aufweisen, der zum Einschalten des Retarders seinen Arbeitsmediuminhalt insbesondere ungesteuert in den Arbeitsraum verdrängt und beim Ausschalten des Retarders das Arbeitsmedium aus dem Arbeitsraum absaugt. Andere Gestaltungsmöglichkeiten, beispielsweise mit einer elastischen Membran oder einer elastischen Arbeitsmediumvorratsraumwandung, die entsprechend arbeiten, sind möglich.

Das erfindungsgemäße Verfahren zum Einstellen des Bremsmomentes des hydrodynamischen Retarders in einem erfindungsgemäßen Antriebsstrang sieht vor, dass das Bremsmoment zweistufig, ohne weitere Stufen, ausschließlich zwischen einem ausgeschalteten Zustand des Retarders, in welchem kein Bremsmoment mit dem Retarder erzeugt wird, und einem eingeschalteten Zustand, in welchem der Retarder in einer einzigen Schaltstufe Bremsmoment erzeugt, variiert beziehungsweise geschaltet wird. Im eingeschalteten Zustand des Bremsmomentes erfolgt die Einstellung des Bremsmomentes vorteilhaft unabhängig von der Temperatur des Arbeitsmediums oder ohne eine andere Temperaturabregelung, das heißt ohne Begrenzung des maximalen Bremsmomentes in Abhängigkeit externer oder interner Steuergrößen, die eine Überhitzung vermeiden sollen.

Die Erfindung soll nachfolgend anhand eines Ausführungsbeispiels exemplarisch beschrieben werden.

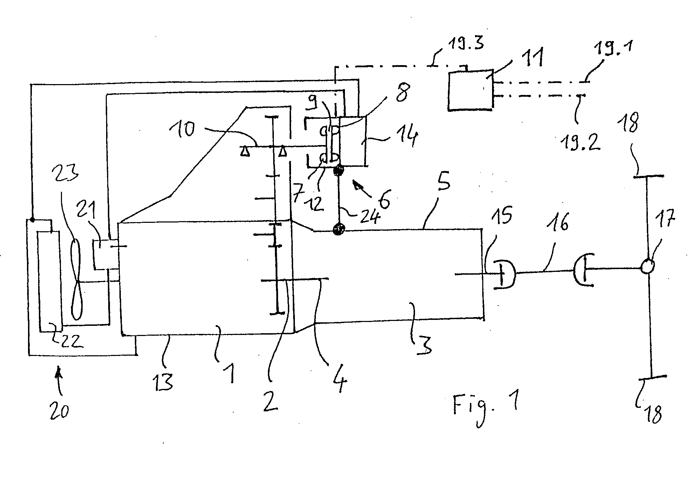

In der Figur 1 ist ein Antriebsmotor 1 mit einem unmittelbar hieran angeschlossenen Getriebe 3 dargestellt. Der Antriebsmotor 1 weist eine Hauptabtriebswelle 2 auf, die mit einer Getriebeeingangswelle 4 in Verbindung steht. In dieser Triebverbindung kann bei Bedarf eine Kupplung (nicht dargestellt) vorgesehen sein, um die Getriebeeingangswelle 4 von der Hauptabtriebswelle 2 des Antriebsmotors 1 zu trennen.

Der Antriebsmotor 1 weist ein Motorgehäuse 13 und das Getriebe 3 weist ein Getriebegehäuse 5 auf, welche die entsprechenden Komponenten dieser Bauteile umschließen. Im Getriebe 3 können verschiedene Übersetzungen zwischen der Getriebeeingangswelle 4 und einer Getriebeausgangswelle 15 durch Schalten entsprechender Kupplungen und/oder Bremsen hergestellt werden. Die Getriebeausgangswelle 15 treibt über eine Kardanwelle 16 und ein Differentialgetriebe 17 Antriebsräder 18 des Kraftfahrzeugs an.

Ein hydrodynamischer Retarder 6, umfassend ein umlaufendes Primärrad 7 und ein stationäres Sekundärrad 8, die miteinander einen torusförmigen Arbeitsraum 9 ausbilden, ist an einer Nebenabtriebswelle 10 des Antriebsmotors 1 auf dessen Sekundärseite angeschlossen. Der hydrodynamische Retarder 6 weist ein Retardergehäuse 12 auf, welches das Primärrad 7 und das Sekundärrad 8 umschließt und in welchem das Sekundärrad 8 drehfest abgestützt ist. Das Primärrad 7 ist fliegend auf der Nebenabtriebswelle 10 gelagert und nur das Sekundärrad 8 wird im Retardergehäuse 12 getragen. Alternativ könnte auch das Primärrad 7 auf einer entsprechenden Retardereingangswelle, die mit der Nebenabtriebswelle 10 unmittelbar oder mittelbar verbunden ist, gelagert sein.

Am Retardergehäuse 12 ist ferner ein Wärmetauscher 14 angeschlossen, der durch das Retardergehäuse 12 getragen wird. Der Wärmetauscher 14 ist in einem Fahrzeugkühlkreislauf 20 eingebunden, um das Arbeitsmedium des Retarders 6 zu kühlen. Mittels des Fahrzeugkühlkreislaufes 20 wird auch der Antriebsmotor 1 gekühlt. Im Fahrzeugkühlkreislauf 20 ist eine Kühlmediumpumpe 21 angeordnet, sowie ein Kühler 22, um Wärme aus dem Fahrzeugkühlkreislauf 20 an die Umgebung abzuleiten, bei Bedarf unter Zuhilfenahme des vom Fahrzeugantriebsmotor 1 angetriebenen Ventilators 23. Die Kühlmediumpumpe 21 ist auf der Primärseite des Antriebsmotors 1 auf einem Nebenabtrieb angeordnet, entsprechend auch der Ventilator 23.

Die Nebenabtriebswelle 10 ist innerhalb des Motorgehäuses 13 gelagert und steht mit der Hauptabtriebswelle 2, die bei einem Verbrennungsmotor als Kurbelwelle ausgeführt ist, über zwischengeschaltete Zahnradstufen in Triebverbindung.

Das Retardergehäuse 12 kann gegen Verdrehung am Getriebegehäuse 5 abgestützt sein, siehe die exemplarisch dargestellte Drehmomentstütze 24. Alternativ könnte das Retardergehäuse 12 auch vollständig vom Getriebegehäuse 5 und/oder vom Motorgehäuse 13 getragen werden.

Dem Retarder 6 ist eine Steuereinrichtung 11 zugeordnet, die über eine Steuerleitung 19.3 mit dem hydrodynamischen Retarder 6 verbunden ist. Die Steuereinrichtung 11 schaltet den hydrodynamischen Retarder 6 ein und aus, beispielsweise in Abhängigkeit von Eingangssignalen, die sie über die Steuerleitungen 19.1 und 19.2 erhält. Über die Steuerleitung 19.1 erhält sie beispielsweise Steuerbefehle durch einen Fahrzeugführer, der mittels eines Tasters oder einer anderen Eingabeeinheit das Ein- und Ausschalten des Retarders 6 befehlen kann. Über die Steuerleitung 19.2 erhält die Steuervorrichtung 11 beispielsweise Eingangssignale eines Fahrassistenzsystems, beispielsweise automatischen Abstandshalters oder Geschwindigkeitsreglers, welches ebenfalls das Ein- und Ausschalten des Retarders 6 befehlen kann.

## Patentansprüche

1. Antriebsstrang, insbesondere eines Kraftfahrzeugs
1.1 mit einem Antriebsmotor (1), umfassend eine Hauptabtriebswelle (2) zum Antreiben von Antriebsrädern (18) oder einem anderen Aggregat;
1.2 mit einem hydrodynamischen Retarder (6), umfassend ein angetriebenes beschaufeltes Primärrad (7) und ein stationäres oder gegenläufig zum Primärrad (7) angetriebenes beschaufeltes Sekundärrad (8), die miteinander einen torusförmigen mit einem Arbeitsmedium befüllten oder befüllbaren Arbeitsraum (9) ausbilden, um Drehmoment hydrodynamisch vom Primärrad (7) auf das Sekundärrad (8) zu übertragen;
1.3 der Antriebsmotor (1) weist eine Nebenabtriebswelle (10) auf, über welche das Primärrad (7) des Retarders (6) angetrieben wird;
**dadurch gekennzeichnet, dass**
1.4 der hydrodynamische Retarder (6) als einstufiger, ungeregelter Retarder (6) ausgeführt ist, der ausschließlich zwischen einem eingeschalteten Zustand und einem ausgeschalteten Zustand schaltbar ist.

2. Antriebsstrang gemäß Anspruch 1, **dadurch gekennzeichnet, dass** der hydrodynamische Retarder (6) einen Wärmetauscher (14) aufweist, über welchen Wärme aus dem Arbeitsmedium, insbesondere Öl, abgeführt wird, in die Umgebung oder in einen hinsichtlich der Wärmeübertragung sekundärseitig am Wärmetauscher (14) angeschlossenen Fahrzeugkühlkreislauf (20), über welchen insbesondere auch der Antriebsmotor (1) gekühlt wird.

3. Antriebsstrang gemäß Anspruch 1, **dadurch gekennzeichnet, dass** der hydrodynamische Retarder (6) in einem Fahrzeugkühlkreislauf (20) angeordnet ist, mittels welchem insbesondere auch der Antriebsmotor (1) gekühlt wird, und das Arbeitsmedium des Retarders (6) zugleich das Kühlmedium des Fahrzeugkühlkreislaufes (20) ist, insbesondere Wasser oder ein Wassergemisch.

4. Antriebsstrang gemäß einem der Ansprüche 1 bis 3, **dadurch gekennzeichnet, dass** der Retarder (6) frei von einer Temperaturabregelung ist, bei welcher das Bremsmoment des Retarders (6) in Abhängigkeit der Temperatur des Arbeitsmediums begrenzt wird.

5. Antriebsstrang gemäß einem der Ansprüche 1 bis 4, **dadurch gekennzeichnet, dass** der Retarder (6) auf der Seite der Hauptabtriebswelle (2) des Antriebsmotors (1) an der Nebenabtriebswelle (10) angeschlossen positioniert ist, welche zum Anschluss eines dem Antriebsmotor (1) im Antriebsleistungsfluss nachgeschalteten Getriebes (3), über welches die Antriebsräder (18) oder das andere Aggregat angetrieben werden, bestimmt ist.

6. Antriebsstrang gemäß einem der Ansprüche 1 bis 5, **dadurch gekennzeichnet, dass** der Arbeitsraum (9) des Retarders (6) stets mit Arbeitsmedium, insbesondere derselben Menge von Arbeitsmedium befüllt ist und der Retarder (6) dadurch ein- und ausschaltbar ist, dass der Antrieb des Primärrades (7) unterbrechbar ist, insbesondere mittels einer Synchronisierkupplung, und/oder bei einem gegenläufig zum Primärrad (7) angetriebenen Sekundärrad (8) der Antrieb des Sekundärrades (8) unterbrechbar ist, insbesondere mittels einer Synchronisierkupplung, und/oder bei einem stationären Sekundärrad (8) eine drehfeste Abstützung des Sekundärrades (8) wahlweise unterbrechbar ist, insbesondere mittels einer Synchronisierkupplung.

7. Antriebsstrang gemäß einem der Ansprüche 1 bis 6, **dadurch gekennzeichnet, dass** dem Retarder (6) eine Befülleinrichtung zur wahlweisen Befüllung des Arbeitsraumes (9) mit Arbeitsmedium zugeordnet ist, und die Befülleinrichtung zum Einschalten des Retarder (6) einen Zulauf für Arbeitsmedium in den Arbeitsraum (9) freigibt oder ein vorbestimmtes Arbeitsmediumvorratsvolumen in den Arbeitsraum (9) verdrängt, und zum Ausschalten des Retarders (6) den Zulauf versperrt und/oder einen Ablauf des Arbeitsraumes (9) öffnet oder das Arbeitsmedium aus dem Arbeitsraum (9) abzieht.

8. Verfahren zum Einstellen des Bremsmomentes eines hydrodynamischen Retarders (6) in einem Antriebsstrang gemäß einem der Ansprüche 1 bis 7, **dadurch gekennzeichnet, dass** das Bremsmoment zweistufig ausschließlich zwischen einem ausgeschalteten Zustand des Retarders (6), in welchem kein Bremsmoment erzeugt wird, und einem eingeschalteten Zustand, in dem in einer einzigen Schaltstufe Bremsmoment erzeugt wird, variiert wird.

9. Verfahren gemäß Anspruch 8, **dadurch gekennzeichnet, dass** im eingeschalteten Zustand des Retarders (6) das Bremsmoment unabhängig von der Temperatur des Arbeitsmediums eingestellt wird.

## Claims

1. A drive train, especially of a motor vehicle,
1.1 with a drive engine (1), comprising a main output shaft (2) for driving drive wheels (18) or any other unit;
1.2 with a hydrodynamic retarder (6), comprising a driven bladed primary wheel (7) and a bladed secondary wheel (8) which is stationary or driven in opposite direction to the primary wheel (7), said wheels jointly forming a toroidal working chamber (9) which is or can be filled with working medium in order to transfer torque hydrodynamically from the primary wheel (7) to the secondary wheel (8);
1.3 the drive engine (1) comprises a power take-off shaft (10), via which the primary wheel (7) of the retarder (6) is driven;
**characterized in that**
1.4 the hydrodynamic retarder (6) is arranged as a single-step, uncontrolled retarder (6) which can be switched exclusively between an activated state and a deactivated state.

2. A drive train according to claim 1, **characterized in that** the hydrodynamic retarder (6) comprises a heat exchanger (14), via which heat is dissipated from the working medium, especially oil, to the ambient environment or to a vehicle cooling circuit (20) which is connected concerning heat transmission on the secondary side with the heat exchanger (14), with the drive engine (1) also especially being cooled by said cooling circuit.

3. A drive train according to claim 1, **characterized in that** the hydrodynamic retarder (6) is arranged in a vehicle cooling circuit (20), by means of which the drive engine (1) is especially also cooled, and the working medium of the retarder (6) is simultaneously the cooling medium of the vehicle cooling circuit (20), especially water or a water mixture.

4. A drive train according to one of the claims 1 to 3, **characterized in that** the retarder (6) is free from temperature down-regulation, in which the braking torque of the retarder (6) is limited depending on the temperature of the working medium.

5. A drive train according to one of the claims 1 to 4, **characterized in that** the retarder (6) is positioned to be connected with the power take-off shaft (10) on the side of the main output shaft (2) of the drive engine (1), which power take-off shaft is determined for the connection of a transmission (3) which is connected in series with the drive engine (1) in the drive power flow and via which the drive wheels (18) or the other unit are driven.

6. A drive train according to one of the claims 1 to 5, **characterized in that** the working chamber (9) of the retarder (6) is always filled with working medium, especially the same quantity of working medium, and the retarder (6) can be activated and deactivated in such a way that the drive of the primary wheel (7) can be interrupted, especially by means of a synchronizing clutch, and/or the drive of the secondary wheel (8) can be interrupted in the case of a secondary wheel (8) which is driven in opposite direction to the primary wheel (7), especially by means of a synchronizing clutch, and/or a torsion-proof support of the secondary wheel (8) can be selectively interrupted in the case of a stationary secondary wheel (8), especially by means of a synchronizing clutch.

7. A drive train according to one of the claims 1 to 6, **characterized in that** the retarder (6) is associated with a filling device for selective filling of the working chamber (9) with working medium, and the filling device releases a feed line for the working medium into the working chamber (9) or displaces a predetermined working medium storage volume into the working chamber (9), and for the purpose of deactivating the retarder (6) blocks the feed line and/or opens a discharge of the working chamber (9) or withdraws the working medium from the working chamber (9).

8. A method for setting the braking torque of a hydrodynamic retarder (6) in a drive train according to one of the claims 1 to 7, **characterized in that** the braking torque is varied in two steps exclusively between a deactivated state of the retarder (6) in which no braking torque is generated and an activated state in which braking torque is generated in one single switching step.

9. A method according to claim 8, **characterized in that** in the activated state of the retarder (6) the braking torque is set independent of the temperature of the working medium.

## Revendications

1. Train d'entraînement, en particulier d'un véhicule automobile,
1.1 ayant un moteur d'entraînement (1), comprenant un arbre de sortie principal (2) pour entraîner des roues d'entraînement (18) ou bien un autre groupe ;
1.2 pourvu d'un retardateur hydrodynamique (6), comportant une roue primaire à aubes entraînée (7) et une roue secondaire à aubes (8) stationnaire ou bien entraînée dans le sens contraire de la roue primaire (7), formant ensemble une chambre de travail (9) toroïdale remplie ou pouvant être remplie d'un fluide de travail, pour transmettre un couple de rotation de manière hydrodynamique de la roue primaire (7) à la roue secondaire (8),
1.3 le moteur d'entraînement (1) présente un arbre d'entraînement auxiliaire (10), par le biais duquel la roue primaire (7) du retardateur (6) est entraînée; caractérisé en ce
1.4 le retardateur hydrodynamique (6) est sous forme de retardateur (6) à un étage et non-régulé, qui peut être commuté entre un état connecté et un état déconnecté.

2. Train d'entraînement selon la revendication 1, **caractérisé en ce que** le retardateur hydrodynamique (6) présente un échangeur thermique (14), par l'intermédiaire duquel la chaleur est évacuée du fluide de travail, de l'huile en particulier, à l'air libre ou bien dans un circuit de refroidissement de véhicule (20) connecté à l'échangeur thermique (14) sur le côté secondaire, pour assurer le transfert thermique, par le biais duquel on refroidit également le moteur d'entraînement (1).

3. Train d'entraînement selon la revendication 1, **caractérisé en ce que** le retardateur hydrodynamique (6) est disposé dans un circuit de refroidissement de véhicule (20), par le biais duquel on refroidit en particulier le moteur d'entraînement (1), et le fluide de travail du retardateur (6) est en même temps le fluide de refroidissement du circuit de refroidissement de véhicule (20), en particulier l'eau ou un mélange d'eau.

4. Train d'entraînement selon l'une des revendications 1 à 3, **caractérisé en ce que** le retardateur (6) est à l'abri d'une dérégulation de température à laquelle le couple de freinage du retardateur (6) est limité en fonction de la température du fluide de travail.

5. Train d'entraînement selon l'une quelconque des revendications 1 à 4, **caractérisé en ce que** le retardateur (6) est en position connectée sur le côté de l'arbre de sortie principal (2) du moteur d'entraînement (1) au niveau de l'arbre d'entraînement auxiliaire (10), lequel arbre est prévu pour se connecter à une transmission (3) en aval du moteur d'entraînement (1) dans le flux de puissance d'entraînement, transmission par le biais de laquelle les roues d'entraînement (18) ou bien l'autre groupe sont entraînés.

6. Train d'entraînement selon l'une quelconque des revendications 1 à 5, **caractérisé en ce que** la chambre de travail (9) du retardateur (6) est toujours remplie de fluide de travail, en particulier de la même quantité de fluide de travail et le retardateur (6) peut être connecté et déconnecté de telle sorte que l'entraînement de la roue primaire (7) peut être interrompu, en particulier à l'aide d'un embrayage de synchronisation, et/ou l'entraînement de la roue secondaire (8) peut être interrompu dans le cas d'une roue secondaire (8) entraînée dans le sens contraire de la roue primaire (7), en particulier à l'aide d'un embrayage de synchronisation, et/ou un support rigide en rotation de la roue secondaire (8) peut être interrompu de manière sélective dans le cas d'une roue secondaire stationnaire (8), en particulier à l'aide d'un embrayage de synchronisation.

7. Train d'entraînement selon l'une des revendications 1 à 6, **caractérisé en ce qu'**un dispositif de remplissage est affecté au retardateur (6) pour le remplissage sélectif de la chambre de travail (9) en fluide de travail, et le dispositif de remplissage libère l'arrivée du fluide de travail dans la chambre de travail (9) pour mettre le retardateur (6) en marche ou refoule un volume prédéterminé de réserve de fluide de travail dans la chambre de travail (9), et bloque l'arrivée pour déconnecter le retardateur (6) et/ou ouvre une évacuation de la chambre de travail (9) ou bien évacue le fluide de travail de la chambre de travail (9).

8. Procédé de réglage du couple de freinage d'un retardateur hydrodynamique (6) dans un train d'entraînement selon l'une des revendications 1 à 7, **caractérisé en ce que** le couple de freinage peut varier en deux temps exclusivement entre un état déconnecté du retardateur (6), dans lequel aucun couple de freinage n'est généré, et un état connecté, dans lequel un couple de freinage est généré dans une seule étape de freinage.

9. Procédé selon la revendication 8, **caractérisé en ce que** le couple de freinage est réglé indépendamment de la température du fluide de travail avec le retardateur (6) à l'état connecté.
